# EUROPEAN PATENT APPLICATION

(11) **EP 2 187 473 A1**
(43) Date of publication of application: **19.05.2010**
(21) Application number: 09014314.0
(22) Date of filing: 16.11.2009
(51) Int. Cl.: H01M 10/50, H01M 2/10

(54) **Battery module, and battery box holding battery module and railway vehicle equipped with battery box**

(30) Priority: 18.11.2008 JP 2008294815
(71) Applicant: Hitachi Ltd., Chiyoda-ku Tokyo 100-8280 (JP)
(72) Inventor: Yasuda, Yosuke, Tokyo 100-8220 (JP); Suzuki, Osamu, Tokyo 100-8220 (JP); Shimada, Motomi, Tokyo 100-8220 (JP); Kaneko, Takashi, Tokyo 100-8220 (JP); Ishida, Seiji, Tokyo 100-8220 (JP); Arita, Hiroshi, Tokyo 100-8220 (JP)
(74) Representative: Beetz & Partner

(57) **Abstract**

The invention provides a battery module and a railwayvehicle (1000a, 1000b), wherein the structure of the battery module (1110) can be switched easily between a draft structure and an enclosed structure in response to the specifications of a system, and a high-performance cooling structure making use of the respective structures is enabled regardless of which cooling structure is selected. A package of battery modules (1110) in which multiple battery cells (1111) are arranged in parallel has openings (1112) formed on a pair of side panels of the package throughwhich the side walls of the battery cells 1111 are exposed. Further, either cooling ducts (1118) for letting ambient cooling air flow therethrogh or cover plates (1115) for sealing the package of the battery modules (1110) are selectively attached to openings (1112). The cover plates (1115) have heat absorbing blocks (1113) disposed on the inner side thereof for thermally coming into contact with the side walls of the battery cells (1111), and radiating fins (1114) disposed on the outer side thereof.

## Description

### BACKGROUND OF THE INVENTION

### Field of the invention

The present invention relates to multiple battery modules and a battery box storing the same for energy management, and further relates to a railway vehicle having a high-voltage, large-capacity battery box to be preferably mounted on hybrid railway vehicles.

### Description of the related art

Secondary batterysystemscomposed of multiple battery cells having a high output density such as lithium-ion cells and nickel-hydrogen cells are used widely for industrial purposes. Especially in recent years, high-voltage and large-capacity secondary battery systems are growing popular as storage systems for hybrid automobiles.

With respect thereto, in the field of railway vehicles, hybrid railway vehicles are actively developed in which a power generator driven by a diesel engine and a secondary battery system are combined to supply power to the motor with the aim to save energy. In hybrid railway vehicles, the energy generated during deceleration of the vehicle is regenerated and charged in the secondary battery system, so as to enable reuse of the energy regeneration that had not been possible in prior art diesel cars driven solely via diesel engines, and to thereby save energy. Furthermore, when the vehicle is running, discharge from the secondary battery system can be used to assist acceleration, so that the system can correspond to high-speed railway vehicles.

Here, the voltage of the secondary battery system disposed in hybrid vehicles is approximately 200 V and the capacity thereof is approximately a few kWh, but on the other hand, the voltage of the secondary battery system disposed in hybrid railway vehicles is normally between 750 to 1500 V and the required capacity thereof is approximately tens to a few hundred kWh.

Considering the facilitation of maintenance and inspection of the battery cells, the safety and the transit performance thereof, it is preferable that the battery cells are formed into a module including a few to dozens of battery cells as a unit. On the contrary, the secondary battery system of hybrid automobiles is often formed as a battery module including a few to dozens of battery cells with respect to the necessary voltage and capacity.

In a large capacity battery module, the density of heat generation within the battery cell during charging and discharging is high, so from the viewpoint of stability behavior of the battery cells and modules and ensuring long-term reliability, it is often necessary to actively cool the battery cells. A possible means may be a draft structure using a blower or the like to take the ambient air around the battery module actively into the module.

Based on such background, it is assumed that a battery box combining a plurality of battery modules for hybrid automobiles is formed to correspond to hybrid railway vehicles.

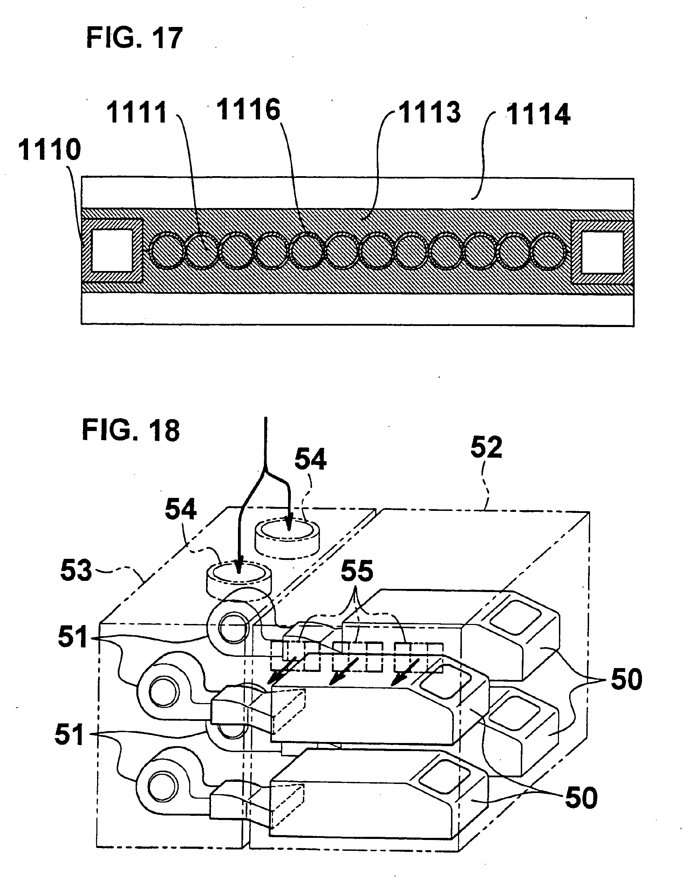

A battery box disclosed in Japanese patent application laid-open publication No. 2005-19231 (patent document 1) is known as an example of the secondary battery system provided in a vehicle. As shown in FIG. 18, the battery box comprises multiple battery modules 50 including multiple battery cells, blowers 51 corresponding to the respective battery modules 50 for introducing cooling air, a battery case 52 for storing the multiple battery modules 50, and a blower case 53 for storing the multiple blowers 51. The blower case 53 stores a number of blowers 51 corresponding to the number of battery modules 50, and is connected to the intake side of the battery case 52.

According to the battery box arranged as above, cooling air is introduced into the blower case 53 through intake ports 54 disposed on the blower case 53. The air having been introduced into the blower case 53 is sucked in through the respective blowers 51 and sent into the respective battery modules 50. Thereafter, the air is subjected to heat exchange with battery cells not shown in the respective battery modules 50, discharged into the battery case 52, and then discharged through an outlet port 55 disposed in the battery case 52 to the exterior of the battery case 52.

When a draft structure is adopted for introducing ambient air into the battery module as shown in patent document 1, a problem related to safety and reliability may occur, such as by the dust having conductivity existing in the ambient air entering the module and coming into contact with battery electrodes or conductors connecting battery cells and causing short circuit, or by the abnormality occurring within the battery cells causing electrolyte having combustibility leaking to surrounding areas.

A possible means for solving this problem is to adopt an enclosed structure for the battery module or the battery box storing multiple battery modules, but in that case, the cooling of battery cells becomes troublesome compared to the draft structure.

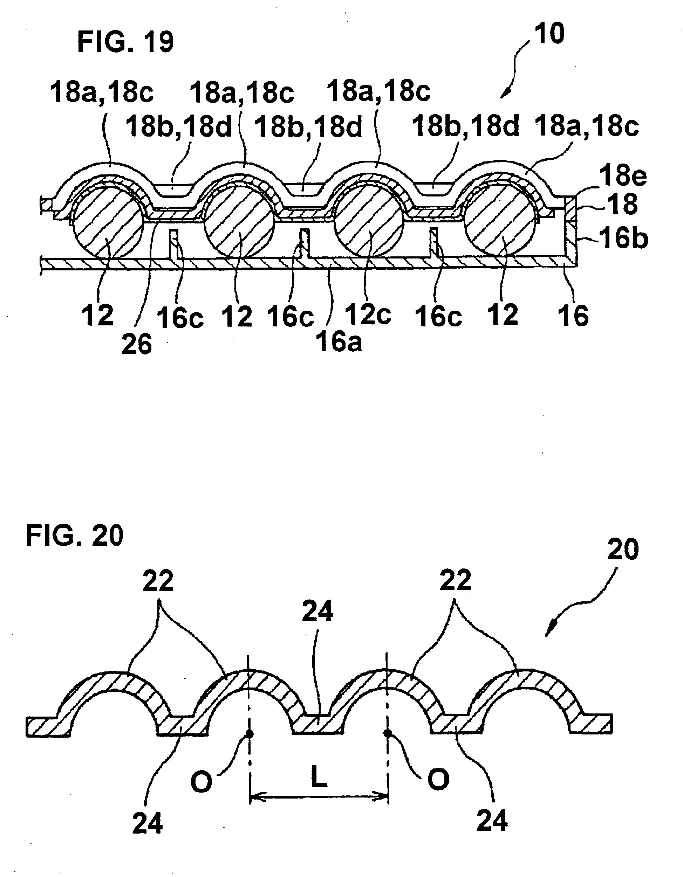

Japanese patent application laid-open publication No. 2006-92935 (patent document 2) discloses a battery box module as an example of the secondary battery system in which the battery module is formed as an enclosed structure. According to this battery module, as shown in FIGS. 19 and 20, the inner side of the module is formed as an enclosed structure, and a metallic radiating panel 22 having a cross-section including multiple circular arcs is attached to side walls of multiple battery cells 12, which is closely attached to a top case 18 so as to improve the cooling performance of the battery cells.

As described, upon selecting the cooling structure of the battery module, that is, upon selecting either the draft structure or the enclosed structure, the cooling performance has a relation of the trade off with the ensuring of safety and reliability, so that the form of packaging of the battery modules must be varied to correspond to the installation conditions or the load conditions of the battery module, or the specifications of the system in which the battery modules are assembled.

### SUMMARY OF THE INVENTION

The object of the present invention is to provide a battery module, a battery box holding the battery module and a railway vehicle equipped with the same, wherein the packaging structure of the battery modules is made common as much as possible, the switching of structure between a draft structure and an enclosed structure is facilitated to correspond to installation conditions, load conditions and the specification of the system in which the battery module is assembled, and a high-performance cooling structure corresponding to the respective properties of the structure is realized regardless of which cooling structure is selected.

As a means for realizing the above-mentioned objects, the present invention provides a battery module having a plurality of battery cells stored in parallel, wherein openings are formed on a pair of side portions mutually facing opposite directions of a package for holding the battery cells, through which side walls of the battery cells held therein are exposed. Further, on at least one of the pair of side portions of the battery module having openings, either a cooling duct for enabling air to flow through the package via the opening portions, or a cover plate covering the opening portion to form the package as an enclosed structure having on the inner side of the module of the cover plate a heat transfer member formed to fit to the side walls of the battery cells and thermally in contact with the battery cells is selectively disposed, wherein the battery module is designed so that these additional components can be attached thereto easily.

According to this arrangement, it becomes possible to make the packaging structure of the battery modules common as much as possible, and the switching of structure between a draft structure and an enclosed structure is facilitated to correspond to installation conditions, load conditions and the specifications of the system in which the battery modules are assembled. That is, when a cooling duct is disposed, ambient air is flown into the side walls of the group of battery cells so as to cool the battery cells, and when a cover plate is provided, the package of the battery module is formed as an enclosed structure, and a heat transfer member formed to fit the side walls of the battery cells and thermally in contact with the battery cells is disposed on the inner side of the cover plate facing the module, so as to discharge the heat from the inner side of the package generated by battery cells to the exterior via the heat transfer member.

Now, by inserting a thermally conductive elastomer between the heat transfer member attached to the battery module and the side walls of the battery cells, it becomes possible to reduce the thermal contact resistance between the heat transfer member and the battery cells. Further, the heat transfer member may have a centrum in the interior thereof, and the centrum contributes to lighten the weight of the battery module. Furthermore, the heat transfer member may have a heat pipe embedded therein, and the heat pipe can reduce the temperature dispersion of the heat transfer member with respect to the direction of flow of air (wherein the cooling effect is strong near the intake side and the temperature is relatively low, while the cooling effect is not strong near the outlet side and the temperature is relatively high) and the temperature can be equalized. Further, the heat transfer members disposed on both sides of the battery cells can be mutually in close contact with a circumference of the rows of battery cells, by which the temperature of the heat transfer member can be equalized. Moreover, the heat transfer member attached to the battery module can have a radiating fin disposed on an opposite side of the cover plate from the side in contact with the battery cells, or the heat transfer member can have a refrigerant channel connected to an external cooling source, and according to these arrangements, active and efficient discharge of heat is enabled, and the cooling performance in an enclosed structure can be easily enhanced or controlled.

Moreover, the battery cells can be integrated as a battery cell group disposed on a single stage or on multiple stages, and the battery cell group can constitute a group configuration composed of a single group or of multiple groups arranged laterally.

According further to the present invention, a battery box having a plurality of battery modules is obtained, wherein the batterymodules are held in an interior of a box by being sandwiched between two side panels. This battery box enables to make the packaging structure of the battery modules common as much as possible, and the switching of structures between a draft structure and an enclosed structure is facilitated to correspond to installation conditions, load conditions and the specifications of the system in which the battery modules are assembled. According to the battery box adopting the battery module with an enclosed structure, a radiating fin is disposed on the cover plate at the side opposite to that coming in contact with the battery cells, and the battery modules are each arranged so that the radiating fins are positioned to extend in a direction corresponding to a direction of flow of cooling air flowing from an intake side of the battery box toward an outlet side, and intake and outlet ports are formed to the two side panels so as to communicate with draft portions formed between the radiating fins. According to the battery box arranged in this manner, the cooling air taken into the battery box flows from the intake port on the intake-side side panel through the draft portion between the radiating fins of the battery modules to thereby cool the respective battery modules, and flows out through the outlet port on the outlet-side panel.

Further according to the present invention, by assembling the battery module or the battery box in a vehicle driver system, it becomes possible to obtain a railway vehicle having a battery module or a battery box capable of realizing a high performance cooling structure in a hybrid railway vehicle.

The present invention enables to provide a battery module, a battery box holding the battery module and a railway vehicle equipped with the battery box, wherein a large portion of the packaging structures of the battery modules is made common, according to which the costs of the battery modules are cut down, and the cooling structure of the battery modules can be switched between a draft structure and an enclosed structure to correspond to product specifications, wherein regardless of which cooling structure is selected, a high performance cooling structure making use of the respective characteristics can be obtained.

### BRIEF DESCRIPTION OF THE DRAWINGS

FIG. 1 is a view showing the main structure of a battery module according to one embodiment of the present invention;
FIG. 2 is a cross-sectional view taken at arrows A-A' of FIG. 1;
FIG. 3 is an exploded view showing the main arrangement of an "enclosed type" battery module according to one preferred embodiment of the present invention;
FIG. 4 is a view showing the main structure of the "enclosed type" battery module shown in FIG. 3;
FIG. 5 is a cross-sectional view taken at line B-B' of FIG. 4;
FIG. 6 is a cross-sectional view taken at line C-C' of FIG. 4;
FIG. 7 is a view showing the main structure of a "draft type" battery module according to one embodiment of the present invention;
FIG. 8 is a cross-sectional view taken at line D-D' of FIG. 7;
FIG. 9 is a cross-sectional view taken at line E-E' of FIG. 7;
FIG. 10 is a cross-sectional view showing a battery box holding multiple "enclosed type" battery modules according to one preferred embodiment of the present invention;
FIG. 11 is a cross-sectional view showing a battery box holding multiple "open type" battery modules according to one preferred embodiment of the present invention;
FIG. 12 is a schematic view showing an example of how the battery boxes composed of enclosed type battery modules are mounted on a railway vehicle according to one preferred embodiment of the present invention;
FIG. 13 is a schematic view showing an example of how the battery boxes composed of open type battery modules are mounted on a railway vehicle according to one preferred embodiment of the present invention;
FIG. 14 is a cross-sectional view showing an "enclosed type" "liquid cooling" battery module according to another embodiment of the present invention;
FIG. 15 is a cross-sectional view showing an "enclosed type" battery module according to another embodiment of the present invention;
FIG. 16 is a cross-sectional view showing an "enclosed type" battery module according to another embodiment of the present invention;
FIG. 17 is a cross-sectional view showing an "enclosed type" battery module according to another embodiment of the present invention;
FIG. 18 is a view showing a prior art battery module disclosed in patent document 1;
FIG. 19 is a view showing a prior art battery module disclosed in patent document 2; and
FIG. 20 is a view showing the prior art battery module disclosed in patent document 2.

### DETAILED DESCRIPTION OF THE PREFERRED EMBODIMENTS

Now, the preferred embodiments of the battery module according to the present invention will be described in detail with reference to the drawings.

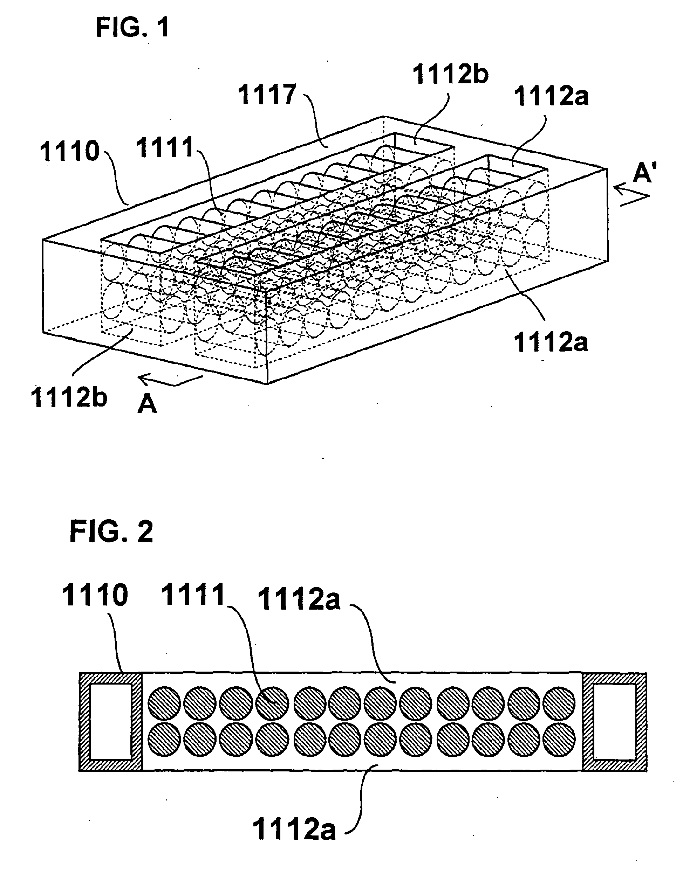

FIG. 1 shows a perspective view of the basic arrangement of a battery module according to one preferred embodiment of the present invention. FIG. 2 is an A-A' cross section of FIG. 1. As shown in FIGS. 1 and 2, multiple battery cells 1111 are stored in parallel in the interior of a package 1117 of a battery module 1110 according to the present embodiment. In FIG. 1, there are a total of 48 integrally arranged battery cells 1111, two stages in the horizontal direction, two rows in the short side direction of the package and 12 rows in the longitudinal direction of the package, wherein the cells are divided into two groups, each group composed of 24 cells, which are arranged tetragonally with a predetermined clearance formed between the cells.

On the corresponding sides of the package 1117, which are the upper side and the lower side mutually facing opposite directions, are formed openings 1112 through which a large portion of the side walls of the stored battery cells 1111 is exposed. In FIG. 1, the battery cells are divided into two groups, so the number of openings 1112 disposed on the upper and lower sides are, in total, four. According to the battery cells arranged as above, as shown in FIG. 2, the side wall surfaces of the battery cells 1111 are communicated through the openings 1112 with the ambient air.

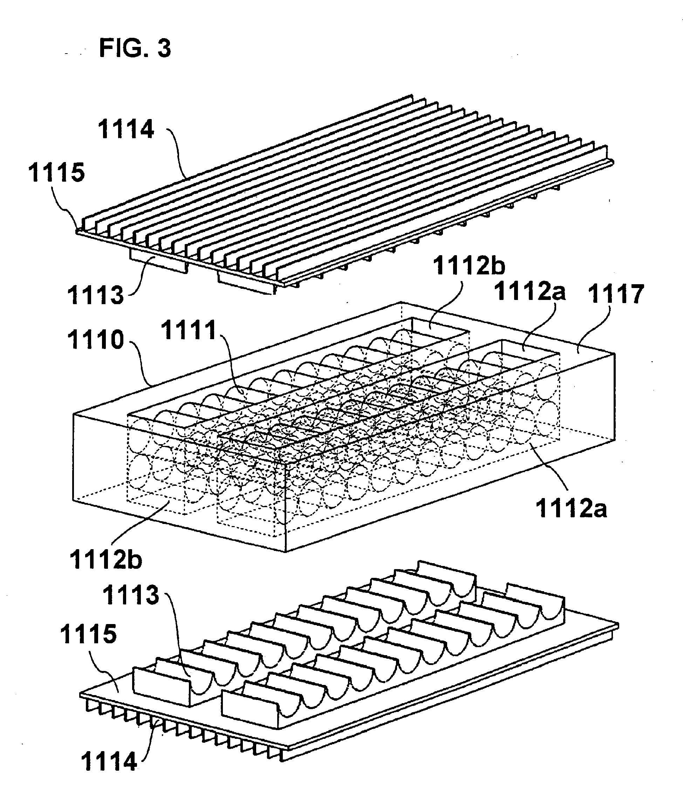

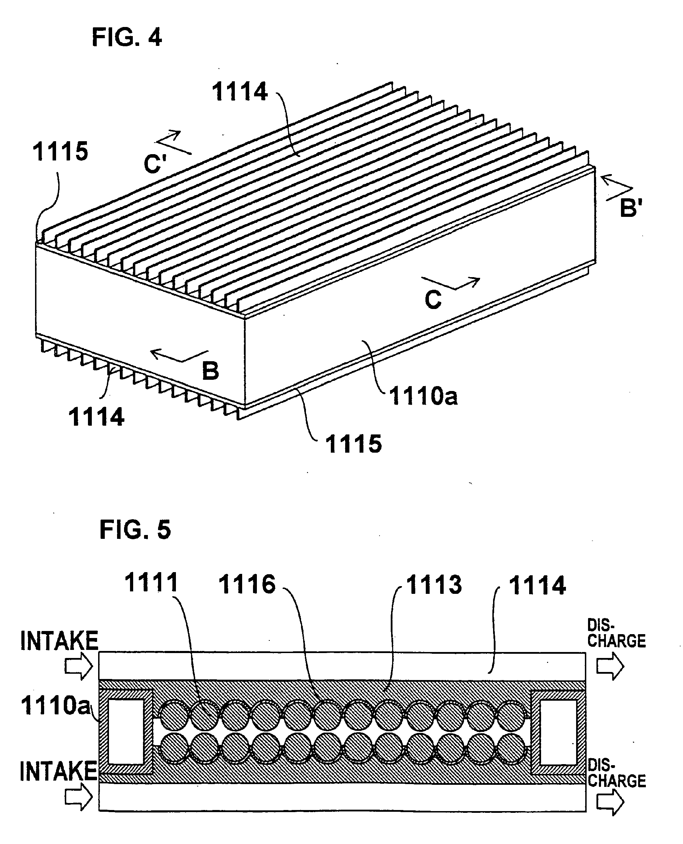

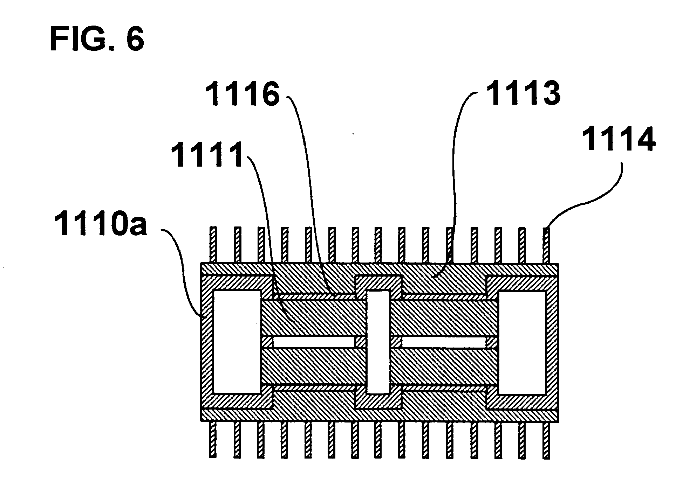

FIG. 3 shows an exploded perspective view of the battery module having an "enclosed structure" by adding components to the basic arrangement of the battery module illustrated in FIG. 1, FIG. 4 shows a perspective view of the arrangement after adding the components illustrated in FIG. 3, FIG. 5 is a B-B' cross-section of FIG. 4, and FIG. 6 is a C-C' cross-section of FIG. 4.

FIGS. 3 through 6 illustrate the battery module 1110a formed as an "enclosed type" in which cover plates 1115 are attached to upper and lower surfaces with respect to the openings 1112 to form the whole module as an enclosed structure. The cover plate 1115 includes heat absorbing blocks 113 having the side facing the inner side of the module formed to have a shape corresponding to the side walls of the battery cells 1111 (a waveform in which semicylindrical shapes are arranged continuously), and the shape of the cover plate is thermally adhered along the side walls of the battery cells 1111. Radiating fins 1114 are disposed on the heat absorbing blocks 1113 on the outer side surface of the battery module 1110a. The heat absorbing blocks 1113 correspond to the heat transfer member of the present invention. Further, appropriate pressure is applied between the heat absorbing blocks 1113 and the battery cells 1111, so that the thermal contact resistance thereof is sufficiently reduced. The radiating fins 1114 are disposed as a heat-transfer enhancement means for discharging the heat generation of the battery cells 1111 to the ambient air. As shown in FIG. 6, insulating sheets 1116, that are heat transfer elastomers, are inserted between the heat absorbing blocks 1113 ad the side walls of the battery cells 1111 so as to reduce the thermal contact resistance between the heat absorbing blocks 1113 and the battery cells 1111.

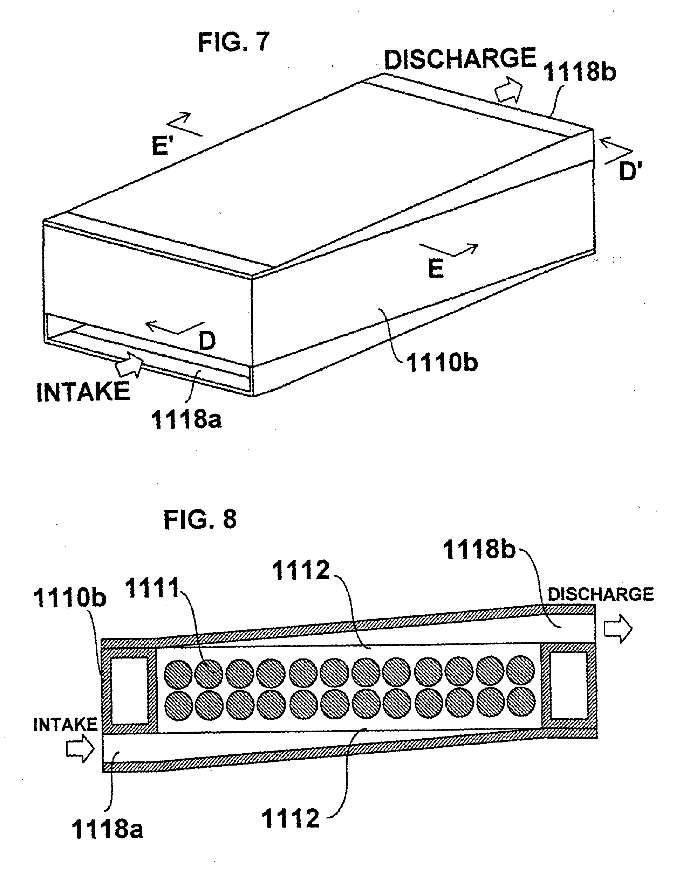

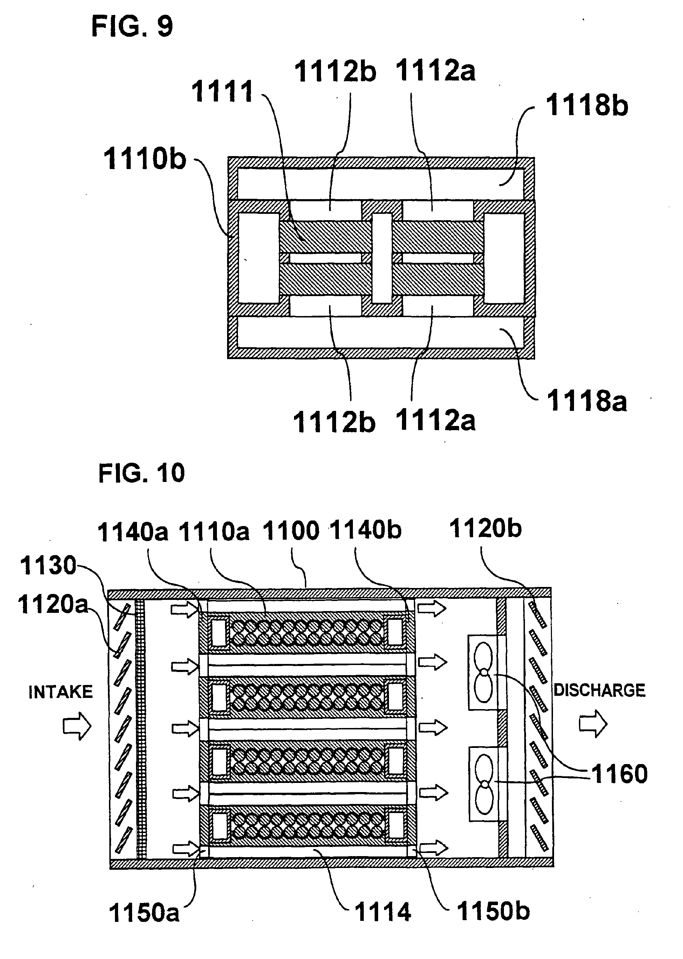

FIG. 7 is a perspective view showing the arrangement of a battery module constituting a "draft structure" formed by adding components to the basic structure of the battery module illustrated in FIG. 1. FIG. 8 is a D-D' cross-section of FIG. 7, and FIG. 9 is an E-E' cross-section of FIG. 7.

The battery module illustrated in FIGS. 7 through 9 is a "draft type" battery module 1110b having feed ports 1118 attached to upper and lower side panels 1117 for introducing outer air and cooling the battery cells 1111 placed in the module via the openings 1112. In the present embodiment, the feed ports 1118 assume that a plurality of the present battery modules 1110b can be stacked vertically, and the ports are formed so that cooling air can be taken in and discharged through the module ends.

According to the present embodiment, the difference in the packaging structure of the battery modules 1110 due to the differences in cooling structures can be minimized, so that a large portion of the modules can be formed using common components, and the draft structure or the enclosing structure corresponding to product specifications can be switched easily, according to which the costs of the battery modules can be cut down. That is, the package including the pair of upper and lower side panels 1117 illustrated in FIGS. 1 and 2 are common, wherein according to the battery module illustrated in FIGS. 3 through 6, cover plates 1115 are additionally disposed above and below the common structure, and according to the battery module illustrated in FIGS. 7 through 9, cooling ducts are additionally disposed to the common structure, in other words, feed ports 1118 are additionally provided to upper and lower areas thereof.

Generally when a draft package is enclosed, the cooling performance of the internal electric components is deteriorated. In order to compensate for this problem, according to the battery module 1110a formed as an "enclosed structure" of the present embodiment, heat absorbing blocks 1113 having a shape corresponding to the side walls of the battery cells 1111 are disposed, and appropriate pressure is applied thereto, by which the heat transfer resistance with the cover plates 1115 is reduced and the heat transfer from the battery cells 1111 to the cover plates 1115 is enhanced. Further, in order to enhance heat transfer from the cover plates 1115 to the ambient air, radiating fins 1114 are disposed on the outer surface of the cover plates 1115. By examining the increase of temperature, it is confirmed that by disposing these two heat-transfer enhancement means (the heat absorbing blocks 1113 and the radiating fins 1114), the cooling performance of battery cells in the enclosed structure becomes substantially eqivalent to the cooling performance of battery cells in a draft structure.

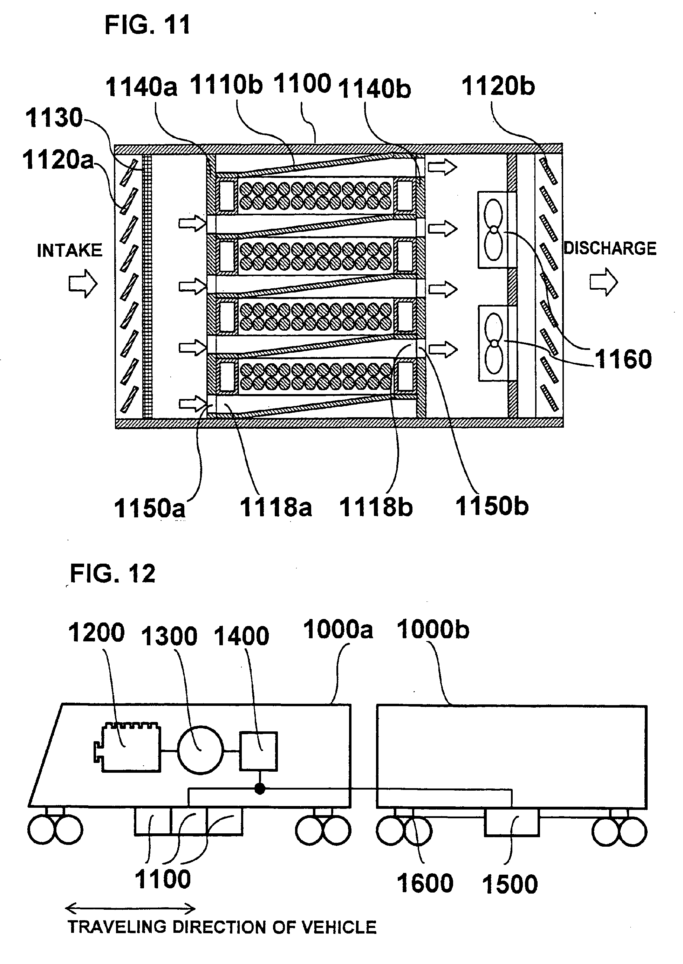

Next, with reference to FIGS. 10 and 11, we will describe the structure of a battery box 1100 having multiple battery modules 1110 held therein.

FIG. 10 shows a cross-sectional view of a battery box having a plurality of "enclosed type" battery modules held therein according to one preferred embodiment of the present invention. The battery box 1100 includes a plate-like inlet-side panel 1140a and an outlet-side panel 1140b, wherein multiple battery modules 1110a stacked vertically are arranged so as to be sandwiched between the inlet-side panel 1140a and the outlet-side panel 1140b within the battery box 1100.

The inlet-side panel 1140a has multiple horizontally-long rectangular intake ports 1150a for introducing cooling air. The intake ports 1150a are formed so that they are respectively communicated with the draft portions between the radiating fins 1114 disposed on the upper and lower surfaces of the battery module 1110a, and are in close contact with the inlet side of the radiating fins 1114 to introduce cooling air between the radiating fins 1114.

A filter 1130 for preventing entry of dust into the battery box 1100 is disposed on the front side of the inlet-side panel 1140a. Further, on the front side of the filter 1130 is disposed aninlet-side louver 1120a for preventing rainwater from entering the battery box 1100 while taking in cooling air to the battery box 1100.

The outlet-side panel 1140b has multiple horizontally-long outlet ports 1150b for discharging the air having performed heat exchange with the radiating fins 1114 to fans disposed on the downstream side. The outlet ports 1150b are formed so that they are respectively communicated with the draft portions between the radiating fins 1114 disposed on the upper and lower surfaces of the battery module 1110a, and are in close contact with the outlet side of the radiating fins 1114 to discharge the cooling air having passed through the radiating fins 1114.

On the rear side area of the outlet-side panel 1140b are disposed fans 1160 for discharging to the exterior the air having passed through the radiating fins 1114 and subjected to heat exchange. Further, on the rear side of the fans 1160 is disposed an outlet-side louver 1120b for preventing rainwater from entering the battery box 1100 while taking in cooling air to the battery box 1100.

Therefore, when the fans 1160 are operated, the cooling air taken in from the inlet-side louver 1120a is flown via the filter 1130 through the intake ports 1150a of the inlet-side panel 1140a to the area between the radiating fins 1114, and after the air is subjected to heat exchange between the radiating fins 1114, it is passed through the outlet ports 1150b and sucked in through the fans 1160 to be discharged via the outlet-side louver 1120b to the exterior.

FIG. 11 shows a cross-sectional view of a battery box having a plurality of "draft type" battery modules placed therein according to one preferred embodiment of the present invention. Similarly as FIG. 10, the battery box 1100 includes a plate-like inlet-side panel 1140a and an outlet-side panel 1140b, wherein multiple battery modules 1110b stacked vertically are arranged so as to be sandwiched between the inlet-side panel 1140a and the outlet-side panel 1140b within the battery box 1100.

The intake ports 1150a disposed on the inlet-side panel 1140a are respectively communicated with the intake ducts 1118a disposed on the lower side of the battery modules 1110b, and the outlet ports 1150b disposed on the outlet-side panel 1140b are respectively communicated with the outlet ducts 1118b disposed on the upper side of the battery modules 1110b.

As described, the present invention enables to form package structures of the battery modules 1110 in the battery box 1100 to be common as much as possible, while enabling to easily change the structures between a draft structure and an enclosed structure to correspond to the installation conditions, the load conditions, and the specification of the system in which the battery is assembled. That is, as shown in FIGS. 10 and 11, regardless of which type of battery module 1110a or 1110b is selected, the structure of the battery box 1100 is substantially common, with only the intake ports 1150a and the outlet ports 1150b slightly varied, and it is possible to switch the systems easily.

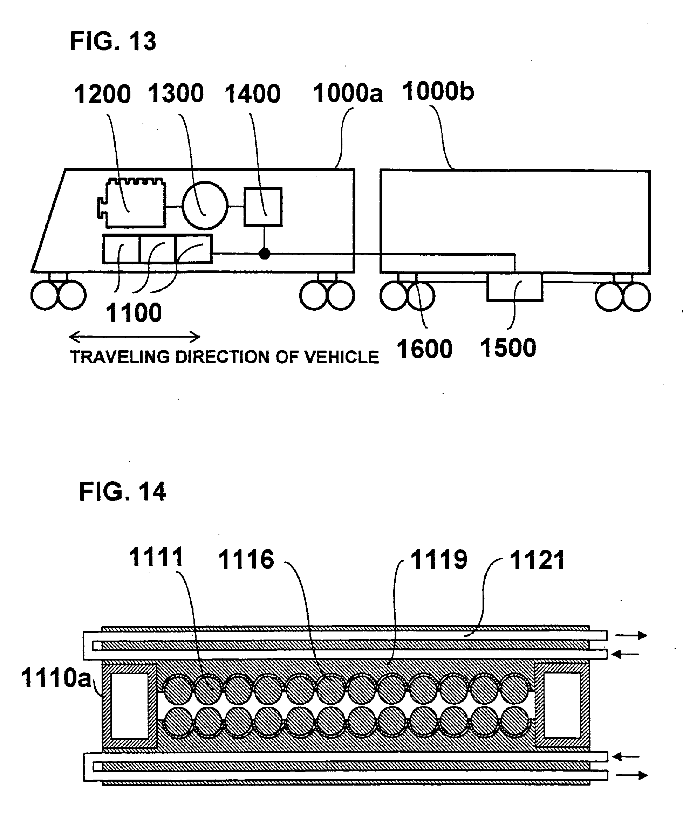

Next, with reference to FIGS. 12 and 13, we will describe an example of how the battery box 1100 is applied to a hybrid railway vehicle.

FIGS. 12 and 13 illustrate mounting examples of a hybrid railway vehicle, wherein the hybrid system (vehicle driver system) includes a battery box 1100, a diesel engine 1200, a power generator 1300, a converter 1400, an inverter 1500, a motor 1600, and so on. If the battery box 1100 is disposed under the floor of a power supply car 1000a as shown in FIG. 12, it is preferable to dispose enclosed type battery modules 1110a in the battery box 1100 for safety, and if the battery box 1100 is disposed within the power supply car 1000a as shown in FIG. 13, it is preferable to dispose draft type battery modules 1110b in the battery box 1100 considering the cooling performance.

Further, in order to minimize the difference of flow-in conditions of air to the battery boxes 110 with respect to the traveling direction of the vehicle and to enable the battery modules 1110 (refer to FIG. 3) to be removed and attached in the direction of the side wall of the power supply car C1 during maintenance and inspection of the battery boxes 1100, it is preferable for the battery boxes 1100 to be installed with the inlet-side louver 1120a (refer to FIG. 10) and the outlet-side louver 1120b (refer to FIG.10) facing the direction orthogonal to the traveling direction of the vehicle.

In the power supply car 1100, the alternating current obtained via a power generator 1300 driven via a diesel engine 1200 is converted into direct current via a converter 1400. The direct current from the converter 1400 and the direct current from the battery boxes 1100 is converted via an inverter 1500 disposed on a motor car 1000b into alternating current with an arbitrary frequency, which acts as the driving power of a motor 1600 for driving the railway vehicle. Further, the output of the battery boxes 1100 and the power generator 1300 are arbitrarily controlled according to operation modes.

The present invention enables to achieve a battery module and a railway vehicle equipped with such battery module, wherein a large portion of the packaging structures of the batterymodules are made common, so that the costs of the battery modules are cut down, and the switching of structures between a draft structure and an enclosed structure can be performed easily to correspond to the specifications of the product, with both cooling structures capable of realizing a high-performance cooling structure making use of the respective characteristics.

Other preferred embodiments of the present invention will now be described. FIGS. 14, 15, 16 and 17 illustrate enclosed type battery modules according to other embodiments.

As shown in FIG. 14, it is possible to provide liquid cooling blocks 1119 having refrigerant channels 1121 disposed in the interior thereof instead of the radiating fins in order to cool the battery cells 1111.

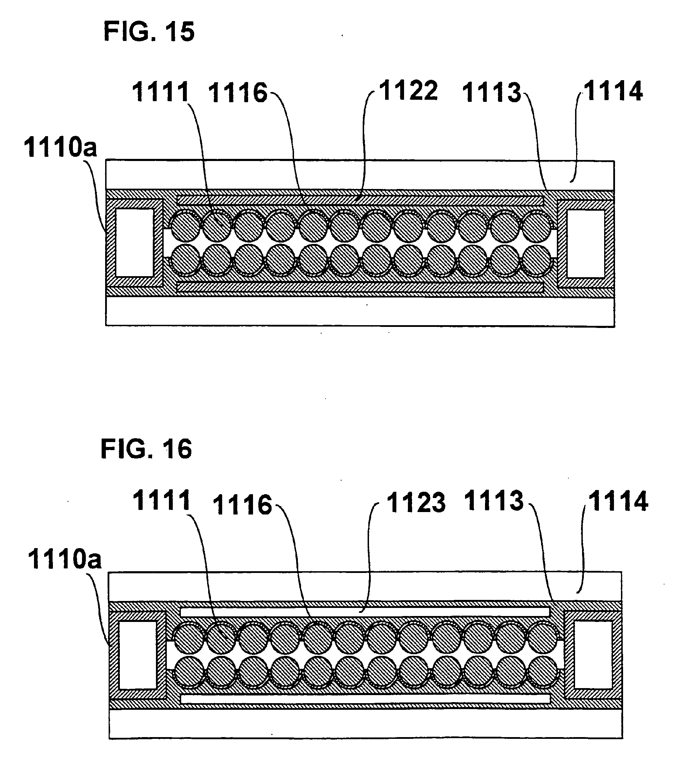

Further, as shown in FIG. 15, heat pipes 1122 can be embedded in heat absorbing blocks 1113 so as to equalize the heat with respect to the direction of air flow.

Further, as shown in FIG. 16, hollow blocks 1123 can be disposed instead of the heat absorbing blocks 1113 so as to reduce the weight of the battery modules. The hollow blocks 1123 correspond to the centrums according to the present invention.

Even further, as shown in FIG. 17, it is also possible to arrange the battery cells 1111 only in a single line in the vertical direction within the battery module 1110, and to closely attach the heat absorbing blocks 1113 to both sides of the battery cells 1111.

## Claims

1. A battery module (1110) having a plurality of battery cells (1111) stored in parallel, wherein openings (1112) are formed on a pair of side portions mutually facing opposite directions of a package (1117) holding the battery cells (1111), through which side walls of the battery cells held therein are exposed.

2. The battery module (1110) according to claim 1, wherein
on at least one of the side portions of the package (1117) is disposed a cooling duct for enabling air to flow through the package (1117) via the opening portions.

3. The battery module (1110) according to claim 1, wherein
on at least one of the side portions of the package (1117) is disposed a cover plate (1115) covering the opening to form the package (1117) as an enclosed structure, and on an inner side of the cover plate (1115) facing to the module is disposed a heat transfer member (1113) shaped to fit to the side walls of the battery cells (1111) and thermally in contact with the battery cells (1111).

4. The battery module (1110) according to claim 3, wherein
a thermally conductive elastomer (1116) is disposed between the heat transfer member (1113) and the side walls of the battery cells (1111).

5. The battery module (1110) according to claim 3 or claim 4, wherein
the heat transfer member (1113) has a centrum in the interior thereof.

6. The battery module (1110) according to any one of claims 3 through 5, wherein
the heat transfer member (1113) has a heat pipe embedded therein.

7. The battery module (1110) according to any one of claims 3 through 5, wherein
the heat transfer members (1113) disposed on both sides of the battery cells (1111) are mutually in close contact with a circumference of the rows of battery cells (1111).

8. The battery module (1110) according to any one of claims 3 through 7, wherein
a radiating fin (1114) is disposed on the cover plate (1115) at the side opposite to the side in contact with the battery cells (1111).

9. The battery module (1110) according to any one of claims 3 through 7, wherein
a refrigerant channel connected to an external cooling source is disposed to the heat transfer member (1113).

10. The battery module (1110) according to any one of claims 1 through 9, wherein
the battery cells (1111) are integrated as a battery cell group disposed on a single stage or on multiple stages, and the battery cell group constitutes a group configuration composed of a single group or of multiple groups arranged laterally.

11. A battery box having a plurality of battery modules according to any one of claims 1 through 7, wherein the battery modules are held between two side panels within a box.

12. A battery box (1100) having a plurality of battery modules (1110) according to claim 8, the battery modules (1110) being held between two side panels within a box (1100), wherein
the battery modules (1110) are each arranged so that the radiating fins are positioned to extend in a direction corresponding to a direction of flow of cooling air flowing from an intake side of the battery box (1100) toward an outlet side; and
intake (1150a) and outlet ports (1150b) are formed to the two side panels so as to communicate with draft portions formed between the radiating fins.

13. A railway vehicle(1000a, 1000b) having the battery module (1110) according to any one of claims 1 through 10 assembled in a vehicle driver system.

14. A railway vehicle having the battery box (1100) according to claims 11 or 12 assembled in a vehicle driver system.
